Europäisches Patentamt

European Patent Office

Office européen des brevets

(11) Publication number: **0 158 537**
**B1**

# EUROPEAN PATENT SPECIFICATION

(45) Date of publication of patent specification: **05.12.90**

(51) Int. Cl.⁵: **B 66 C 23/36, B 60 P 1/54**

(21) Application number: **85302478.4**

(22) Date of filing: **09.04.85**

(54) **Improvements relating to trailer mounted material handling apparatus.**

(30) Priority: **13.04.84 GB 8409613**

(43) Date of publication of application:
**16.10.85 Bulletin 85/42**

(45) Publication of the grant of the patent:
**05.12.90 Bulletin 90/49**

(84) Designated Contracting States:
**AT BE CH DE FR IT LI LU NL SE**

(56) References cited:
**FR-A-1 521 665**
**FR-A-2 320 208**
**GB-A-1 323 801**
**US-A-3 874 526**

(73) Proprietor: **HILLSBORO DIESELS LIMITED**
**37 Old Coach Road**
**Hillsborough County Down BT26 6PB Northern Ireland (GB)**

(72) Inventor: **Murdoch, James Wesley Stirling**
**37 Old Coach Road Hillsborough**
**County Down, BT26 6PB Northern Ireland (GB)**

(74) Representative: **Huskisson, Frank Mackie et al**
**FITZPATRICKS 4 West Regent Street**
**Glasgow G2 1RS Scotland (GB)**

Courier Press, Leamington Spa, England.

# Description

The invention relates to the use of hydraulic material handling apparatus, for example jib-cranes, to assist in the loading and unloading of loads onto and from a lorry. Previously, jib-cranes have been mounted on lorries for this purpose, however this results in reduction of the load carrying capacity and of the loading space available on the platform of the lorry.

In previous attempts to overcome this problem for lorries of heavy load carrying capacity, cranes have been mounted on trailers having wheels and corresponding jacks.

FR-A-2 320 208 discloses a trailer mounted crane including a towing assembly adapted to be attached to the rear end of the chassis of a lorry. Slidably mounted thereon is a work position assembly upon which the crane is mounted.

To enable loading and unloading of the lorry to be accomplished, the trailer mounted crane must be manouvered from the towing position to the work position using the lifting arm of the crane in cooperation with the jacks whilst the towing assembly is disconnected from the lorry chassis and the work position assembly is slid forward to engage with the lorry chassis.

This has the disadvantage that the towing and work position assemblies are separate and require considerable manouvering to allow loading/unloading of the lorry.

It is an object of the present invention to obviate or mitigate these disadvantages.

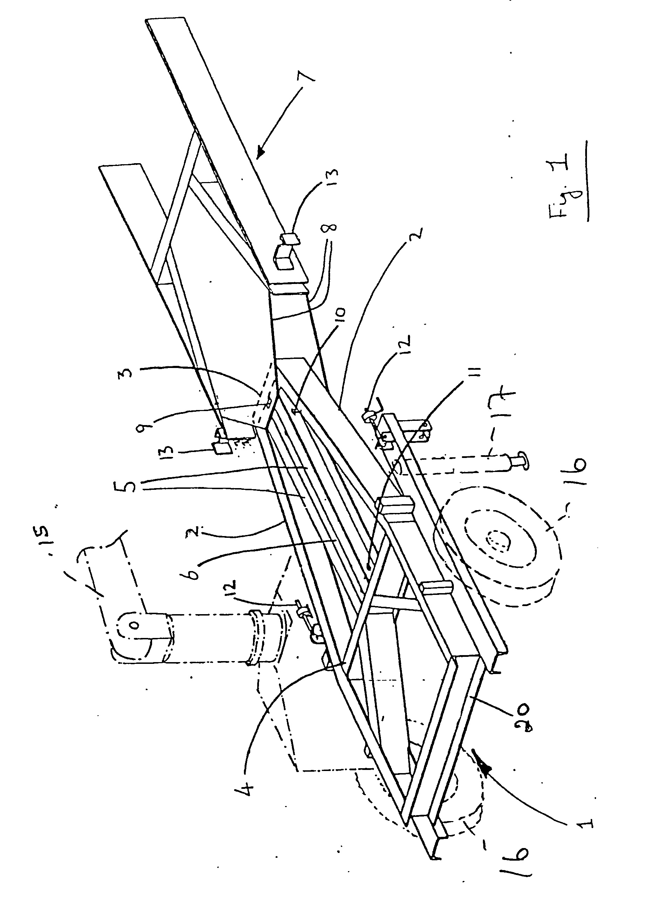

Accordingly, the present invention comprises a trailer having a material handling apparatus mounted on its rearward part, in combination with a housing for mounting at the rear end of the chassis of a lorry, said housing having a shape complementary to that of the forward portion of the chassis of the trailer so that said forward portion of the trailer chassis can be accommodated within the housing for operation of the material handling apparatus, and means are provided for securing the trailer in this working position, or withdrawn from the housing for towing such that the forward portion of the chassis serves as a towing assembly for the trailer when in its withdrawn position (Fig. 1) and alternate means are provided for locating the trailer in the towing position.

Preferably, the chassis of the trailer has two wheels and two corresponding hydraulic jacks, the axle being mounted under the material handling apparatus mounting.

Preferably also, the trailer chassis includes two outer longitudinal members, the forward portions of which converge to a transverse front end piece, between which and a centrally mounted transverse member there are mounted two parallel longitudinal members defining an elongate passage.

Preferably also, centrally of the rearward point of the housing there is provision to receive a vertical pin which, when the trailer is in the towing position, extends through the elongate passage at the forward end thereof.

Preferably also, the parallel longitudinal members include provision to receive a crosspin which traverse the elongate passage whereby the trailer is prevented from moving forward into the housing when in the towing position.

Alternatively, a ram and cylinder unit is provided to extend between the parallel longitudinal members with the end of the unit to be, on extension, near or adjacent to the front end piece carrying an eye through which the vertical pin can pass, said unit serving to move the trailer between its working and towing positions and to hold it in its selected position.

Preferably also, the trailer is provided with security bolts which, when the trailer is moved forward into the housing, are engageable with brackets mounted on the housing whereby the trailer is secured in the working position.

An embodiment of the invention will now be described, by way of example only, with reference to the accompanying schematic drawings in which:-

Fig. 1 is a perspective view of the trailer chassis and the housing in the towing position; and

Fig. 2 is a perspective view of the trailer chassis and the housing in the working position.

Referring now to the drawings, a trailer mounting material handling apparatus such as a jib-crane 15 (shown by broken lines) for 360° slewing has two wheels 16 (shown by broken lines) and two corresponding hydraulic jacks 17 (shown by broken lines). The wheel axle is mounted on the trailer chassis 1 under the jib-crane mounting. The trailer chassis 1 has two outer longitudinal members 2 which, at their forward ends, converge to a transverse front end-piece 3. Between the end-piece 3 and a centrally mounted transverse member 4 there are mounted two parallel longitudinal members 5 which define an elongate passage 6.

The rear of the chassis of a lorry is adapted by the fitment of a housing 7 of a shape complementary to that of the forward part of the trailer chassis 1 and including two vertically spaced plates 8 splayed further apart at their open ends i.e. the rearward part of the plates. Centrally of the rearward part of the plates 8 there is provided an opening 9 to receive a vertical pin (not shown) which, when the trailer is in the towing position (as in Fig. 1), extends through the elongate passage 6 at the forward end thereof. A crosspin can be inserted through openings 10 in the longitudinal members 5 to prevent the trailer moving further forward into the housing 7 while being towed, when, for example, the brakes are applied in the lorry.

In a preferred modification, a ram and cylinder unit is provided to extend between the parallel longitudinal members, formed, for example by two inwardly-facing channel beams. The cylinder is mounted in transverse member 4 and extends rearwardly to transverse member 20 and the ram extends outwardly between the members, the ram having at its distal end an eye through which the vertical pin can pass such that movement between the working and towing positions is governed by retraction and extension of the ram respectively. The unit also serves to hold the trailer at each of these positions, thereby dispensing with the requirement for the crosspin.

The unit is in piped connection with controls and a hydraulic power pack which also serves to operate swivelling and movement of the jib crane and extension and retraction of the jacks 17.

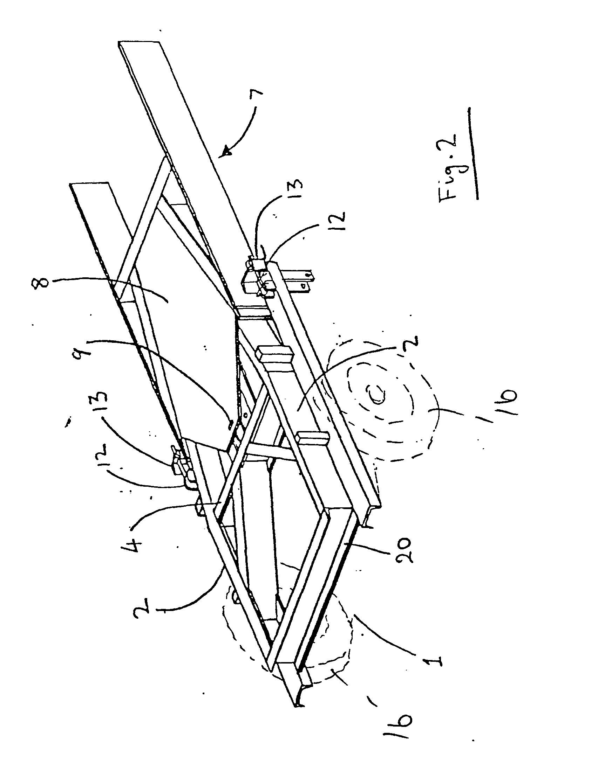

When the lorry is stationary and the crane is to be used, the crosspin is removed and the trailer is manoeuvered forward (or the lorry reversed) until the forward part of the chassis 1 is fully accommodated in the housing 7 (as in Fig. 2). In this position the vertical pin in the opening 9 will abut the transverse member 4 and the crosspin can be located in a second pair of openings 11 in the longitudinal members 5 to as to hold the trailer in position. In addition, security bolts 12 provided on the lateral sides of the trailer chassis 1 as shown can be engaged with brackets 13 on the housing 7. In this position the trailer is fast with the chassis of the lorry. The hydraulic jacks 17 can now be extended to lift the wheels 16 of the trailer off the ground and the jib-crane 15 can then be used as required.

The power source or pack can be mounted on the trailer or, more conveniently, from the hydraulic supply of the lorry, and, obviously, the trailer can be quickly and easily de-coupled from the lorry when not required.

The dimensions of the forward end of the trailer chassis and the housing will depend on the size of the lorry and the weight lifting capacity required. For example, when the invention (including a 0.5 tonne (10 cwt) trailer) is utilised, in combination with a 1.5 tonne (30 cwt) pick up truck, loads up to 1 tonne (20 cwt) can be lifted by the crane.

The above embodiment has been described with reference to a jib-crane, mounted on the trailer, however other forms of material handling apparatus could be mounted on the trailer such as an endless belt elevator for use, for example, to convey concrete from a rotary pan mixer mounted on the chassis of the lorry. Such an elevator could be in hinged lengths extendible by hydraulically operable cylinder and piston arrangements, the bottom length being supported in a mounting capable of pivotal movement about a transverse axis and of 360° slewing.

The trailer 1 can be demounted by extending the jacks 17 and manoeuvring the crane to form a third leg of a tripod to support the forward end of the trailer off the ground, then removing the vertical pin and enabling the lorry to be driven away from the trailer. The trailer can be coupled up in a reverse operation.

The plates 8 are splayed apart at their ends to allow for vertical movement of the trailer relative to the back end of the lorry while being towed over unlevelled ground or roads. A secondary purpose is to assist in a trailer coupling operation.

## Claims

1. A trailer wherein a material handling apparatus (15) is mounted on its rearward part, in combination with a housing (7) for mounting at the rear end of the chassis of a lorry, said housing having a shape complementary to that of the forward portion of the chassis (1) of the trailer so that said forward portion of the chassis (1) can be accommodated within the housing for operation of the material handling apparatus (15) and means (12, 13) being provided to secure the trailer in the working position or withdrawn from the housing for towing characterised in that said forward portion of the chassis (1) serves as a towing assembly for the trailer when in its withdrawn position and means (9, 10) being provided for locating the trailer in the towing position.

2. A trailer as claimed in Claim 1, characterised in that the chassis (1) has two wheels (16) and two corresponding hydraulic jacks (17).

3. A trailer as claimed in Claim 2, characterised in that the axle for the wheels (16) is mounted under the material handling apparatus mounting.

4. A trailer as claimed in Claim 1, 2 or 3, characterised in that the chassis (1) includes a towing assembly comprising two outer longitudinal members (2) the forward portions of which converge to a transverse front end piece (3), between which and a centrally mounted transverse member (4) there are mounted two parallel longitudinal members (6) defining the elongate passage.

5. A trailer as claimed in Claim 4, characterised in that centrally of the rearward point of the housing there is provision (9) to receive a vertical pin which, when the trailer is in the towing position, extends through the elongate passage at the forward end thereof.

6. A trailer as claimed in Claim 4 or 5, characterised in that the parallel longitudinal members (6) include a provision (10) to receive a crosspin which traverse the elongate passage whereby the trailer is prevented from moving forward into the housing when in the towing position.

7. A trailer as claimed in Claim 4, characterised in that a ram and cylinder unit is provided to extend between the parallel longitudinal members (6) with the end of the unit to be, on extension, near or adjacent to the front end piece carrying an eye (9) through which a vertical pin can pass, said unit serving to move the trailer between its working and towing positions and to hold it in its selected position.

8. A trailer as claimed in any one of the preceding claims, characterised in that there are provided security bolts (12) which, when the trailer is moved forward into the housing, are engageable with brackets (13) mounted on the housing whereby the trailer is secured in the working position.

9. A housing (7) for attachment at the rear of a lorry chassis characterised by the housing (7) being mounted, for use, in combination with a trailer having a material handling apparatus (15) mounted on its rearward part, the housing (7) having a shape complementary to that of the forward portion of the chassis (1) of the trailer so that said forward portion of the trailer chassis (1) can be accommodated within the housing (7) for operation of the material handling apparatus (15) and secured in said position by means (12, 13) and means (9, 10) provided for securing the forward portion of the trailer chassis (1) to the housing (7) so as to serve as a towing assembly when in a position withdrawn from the housing (7).

## Patentansprüche

1. Anhänger, auf dessen rückwärtigem Teil eine Werkstofffördereinrichtung (15) angebracht ist, in Kombination mit einem Aufnahmeteil (7) für die Anbringung an dem hinteren Ende des Chassis eines Lastkraftwagens, wobei dieses Aufnahmeteil eine Gestalt aufweist, die komplementär zu der des vorderen Abschnitts des Chassis (1) des Anhängers ist, so daß der vordere Abschnitt des Chassis (1) innerhalb des Aufnahmeteils aufgenommen werden kann für den Betrieb der Werkstofffördereinrichtung (15) und wobei Einrichtungen (12, 13) vorgesehen sind, um den Anhänger in der Arbeitsstellung zu befestigen, oder für das Abschleppen von dem Aufnahmeteil abgezogen werden kann, dadurch gekennzeichnet, daß der vordere Abschnitt des Chassis (1) als eine Schlepperanordnung für den Anhänger dient, wenn er sich in der abgezogenen Stellung befindet, und Einrichtungen (9, 10) vorgesehen sind, um den Anhänger in der Schleppstellung festzustellen.

2. Anhänger nach Anspruch 1, dadurch gekennzeichnet, daß das Chassis (1) zwei Räder (16) und zwei entsprechende hydraulische Stützböcke (17) aufweist.

3. Anhänger nach Anspruch 2, dadurch gekennzeichnet, daß die Achse für die Räder (16) unter der Befestigung der Werkstofffördereinrichtung angebracht ist.

4. Anhänger nach Anspruch 1, 2 oder 3, dadurch gekennzeichnet, daß das Chassis (1) eine Schlepperanordnung einschließt, die zwei äußere langgestreckte Bauteile (2) umfaßt, deren vordere Abschnitte zu einem transversalen vorderen Endstück (3) zusammenlaufen, zwischen dem und einem in der Mitte angebrachten transversalen Bauteil (4) zwei parallele langgestreckte Bauteile (6) befestigt sind, die einen langgestreckten Durchgang begrenzen.

5. Anhänger nach Anspruch 4, dadurch gekennzeichnet, daß in der Mitte der rückwärtigen Stelle des Aufnahmeteils eine Vorkehrung (9) getroffen ist, um einen vertikalen Stift aufzunehmen, der sich, wenn sich der Anhänger in der Schleppstellung befindet, durch den langgestreckten Durchgang an dessen vorderem Ende erstreckt.

6. Anhänger nach Anspruch 4 oder 5, dadurch gekennzeichnet, daß die parallelen langgestreckten Bauteile (6) eine Vorkehrung (10) enthalten, um einen Kreuzzapfen aufzunehmen, der quer durch den langgestreckten Durchgang verläuft, wodurch verhindert wird, daß sich der Anhänger nach vorn in das Aufnahmeteil hinein bewegt, wenn er sich in der Schleppstellung befindet.

7. Anhänger nach Anspruch 4, dadurch gekennzeichnet, daß eine Arbeitszylinderund-Druckkolben-Einheit vorgesehen ist, die sich zwischen den parallelen langgestreckten Bauteilen (6) erstreckt, wobei das Ende der Einheit bei Ausdehnung nahe oder anstoßend an das vordere Endstück sein soll und ein Auge (9) trägt, durch das ein vertikaler Stift hindurchreichen kann, wobei die Einheit dazu dient, um den Anhänger zwischen seiner Arbeitsstellung und seiner Schleppstellung zu bewegen und ihn in seiner ausgewählten Stellung zu halten.

8. Anhänger nach einem der vorhergehenden Ansprüche, dadurch gekennzeichnet, daß Sicherheitsbolzen (12) vorgesehen sind, die, wenn der Anhänger nach vorn in das Aufnahmeteil bewegt wird, mit Haltern oder Klammern (13), die an dem Aufnahmeteil befestigt sind, zum Eingriff gebracht werden können, wodurch der Anhänger in der Arbeitsstellung befestigt wird.

9. Aufnahmeteil (7) zur Befestigung an dem hinteren Ende eines Lastkraftwagenchassis, dadurch gekennzeichnet, daß das Aufnahmeteil (7) für den Gebrauch in Kombination mit einem Anhänger, auf dessen rückwärtigen Teil eine Werkstofffördereinrichtung (15) angebracht ist, zusammenmontiert werden kann, wobei das Aufnahmeteil (7) eine Gestalt aufweist, die komplementär zu derjenigen des nach vorn gerichteten Abschnitts des Chassis (1) des Anhängers ist, so daß dieser vordere Abschnitt des Anhängerchassis (1) innerhalb des Aufnahmeteils (7) aufgenommen werden kann zum Betrieb der Werkstofffördereinrichtung (15) und in dieser Stellung durch Einrichtungen (12, 13) befestigt werden kann, und Einrichtungen (9, 10) vorgesehen sind zum Befestigen des vorderen Abschnitts des Anhängerchassis (1) an dem Aufnahmeteil (7), so daß es als Schlepperanordnung dient, wenn es sich in einer Stellung befindet, in der der Anhänger aus dem Aufnahmeteil (7) herausgezogen ist.

## Revendications

1. Remorque sur la partie arrière de laquelle est monté un appareil de manutention (15), en combinaison avec un réceptacle (7) destiné à être monté à l'extrémité arrière du châssis d'un camion, ce réceptacle ayant une forme complémentaire de celle de la partie avant du châssis (1) de la remorque de sorte que la partie avant du châssis (1) peut être reçue à l'intérieur du réceptacle pour permettre l'utilisation de l'appareil de manutention (15), des moyens (12, 13) étant prévus pour fixer la remorque dans la position de travail, ou sortie du réceptacle pour son remorquage, caractérisée en ce que dans sa position sortie la partie avant du châssis (1) sert d'assemblage pour le remorquage de la remorque, et en ce que des moyens sont prévus pour localiser la remorque dans la position de remorquage.

2. Remorque conforme à la revendication 1, caractérisée en ce que le châssis (1) a deux roues (6) et deux vérins hydrauliques correspondants (17).

3. Remorque conforme à la revendication 2, caractérisée en ce que l'essieu des roues (16) est monté sous le bâti de l'appareil de manutention.

4. Remorque conforme à l'une des revendications 1, 2 ou 3, caractérisée en ce que le châssis (1) comporte un ensemble de remorquage comprenant deux éléments longitudinaux extérieurs (2) dont les parties avant convergent jusqu'à une pièce transversale (3) formant l'extrémité avant, deux éléments longitudinaux parallèles (6) étant montés entre la pièce transversale et un élément transversal central (4) et définissant le passage allongé.

5. Remorque conforme à la revendication 4, caractérisée par des moyens (9) prévus au centre de la pointe arrière du réceptacle pour recevoir une broche verticale qui, lorsque la remorque est dans sa position de remorquage, s'étend dans le passage allongé à l'extrémité avant de celui-ci.

6. Remorque conforme à l'une des revendications 4 ou 5, caractérisée en ce que les éléments longitudinaux parallèles (6) comportent des moyens (10) pour recevoir une broche transversale qui traverse le passage allongé de façon à empêcher la remorque quand elle est dans la position de remorquage, de se déplacer vers l'avant pour pénétrer dans le réceptacle.

7. Remorque conforme à la revendication 4, caractérisée en ce qu'il est prévu un système à piston et cylindre qui s'étend entre les éléments longitudinaux parallèles (6), l'extrémité du système étant, en extension, proche ou voisine de la pièce formant l'extrémité avant, laquelle pièce comporte un oeil (9) dans lequel peut passer une broche verticale, ledit système servant à déplacer la remorque entre sa position de travail et sa position de remorquage et à la maintenir dans la position choisie.

8. Remorque conforme à l'une quelconque des revendications précédentes, caractérisée en ce qu'il est prévu des boulons de sécurité (12) qui sont susceptibles, quand on déplace la remorque vers l'avant pour la faire pénétrer dans le réceptacle, de venir en prise avec des consoles (13) installées sur le réceptacle de façon à fixer la remorque dans sa position de travail.

9. Réceptacle (7) destiné à être fixé à l'arrière du châssis d'un camion, caractérisé en ce que le réceptacle (7) est monté, pour son utilisation, en combinaison avec une remorque sur la partie arrière de laquelle est monté un appareil de manutention (15), le réceptacle (7) ayant une forme complémentaire de celle de la partie avant du châssis (1) de la remorque de façon que la partie avant du châssis (1) de la remorque puisse être reçue à l'intérieur du réceptacle (7) pour le fonctionnement de l'appareil de manutention (15), et être fixée dans cette position par des moyens (12, 13) et des moyens (9, 10) prévus pour la fixation de la partie avant du châssis (1) de la remorque au réceptacle (7) de façon à servir d'ensemble de remorquage lorsque la remorque est dans la position sortie du réceptacle (7).

Fig. 1

Fig. 2